Europäisches Patentamt

European Patent Office

Office européen des brevets

(11) Veröffentlichungsnummer: **0 425 668 A1**

(12) **EUROPÄISCHE PATENTANMELDUNG**
**veröffentlicht nach Art. 158 Abs. 3**
**EPÜ**

(21) Anmeldenummer: 89907377.9

(22) Anmeldetag: 03.04.89

(86) Internationale Anmeldenummer:
PCT/SU89/00085

(87) Internationale Veröffentlichungsnummer:
WO 90/11857 (18.10.90 90/24)

(51) Int. Cl.⁵: **B22F 9/16, C01B 31/30,**
C01B 33/06, C01B 31/34,
C01B 35/04, C01B 21/06

(43) Veröffentlichungstag der Anmeldung:
08.05.91 Patentblatt 91/19

(84) Benannte Vertragsstaaten:
AT CH DE FR GB IT LI NL SE

(71) Anmelder: INSTITUT STRUKTURNOI
MAKROKINETIKI AKADEMII NAUK SSSR
Moskovskaya oblast
Poselok Chernogolovka 142432(SU)

(72) Erfinder: BUROV, Jury Mikhailovich
ul. Tsentralnaya, 18-240 Moskovskaya obl.
pos. Chernogolovka, 142432(SU)
Erfinder: STOLIN, Alexandr Moiseevich
Institutsky pr., 6-86 Moskovskaya obl.
pos. Chernogolovka, 142432(SU)
Erfinder: BOROVINSKAYA, Inna Petrovna
ul. Tretya, 3-2 Moskovskaya obl.

pos. Chernogolovka, 142432(SU)
Erfinder: MERZHANOV, Alexandr Grigorievich
ul. Tretya, 3-2 Moskovskaya obl.
pos. Chernogolovka, 142432(SU)
Erfinder: BORISOV, Evgeny Nikolaevich
ul. Pervaya, 11-4 Moskovskaya obl.
pos. Chernogolovka, 142432(SU)
Erfinder: RATNIKOV, Viktor Ivanovich
ul. Tsentralnaya, 6-41 Moskovskaya obl.
pos. Chernogolovka, 142432(SU)
Erfinder: BUCHATSKY, Leonid Mikhailovich
ul. Lesnaya, 5-99 Moskovskaya obl.
pos. Chernogolovka, 142432(SU)

(74) Vertreter: Nix, Frank Arnold, Dr.
Kröckelbergstrasse 15
W-6200 Wiesbaden(DE)

(54) VERFAHREN UND REAKTOR ZUR ERHALTUNG VON PULVERFÖRMIGEM, FEUERFESTEM MATERIAL.

(57) Das Verfahren schliesst eine Wärmebehandlung einer exothermen Mischung durch Verbrennung und die Einwirkung äusserer Kräfte auf die festen Verbrennungsprodukte in Richtung nach einer Tangente und/oder einer Normale an bzw. zu deren Oberfläche bei einer Temperatur ein. die in einem Bereich von etwa und unter der Verbrennungstemperatur bis 0,5 ihrer Schmelztemperatur mit der Ableitung des gebildeten hochschmelzenden pulverförmigen Werkstoffes liegt. Der Reaktor enthält ein Gehäuse (I) mit einem Reaktionsraum (8), in dessen Innern eine mit dem Hohlraum (8) verbundene Einrichtung (II) für die Zuführung in den Hohlraum (8) der exothermen Mischung unter Druck und ein Rotor (9) mit einem Aufsatz (I0) angeordnet sind. Die äussere Fläche des Aufsatzes (I0) bildet mit der inneren Fläche des Gehäuses (I) einen ringförmigen Spalt (I2) zur Ableitung des pulverförmigen hochschmelzenden Werkstoffs.

EP 0 425 668 A1

# VERFAHREN ZUR HERSTELLUNG EINES HOCHSCHMELZENDEN PULVERFÖRMIGEN WERKSTOFFES UND REAKTOR FÜR DESSEN DURCHFÜHRUNG

Gebiet der Technik

Die vorliegende Erfindung bezieht sich auf ein Verfahren zur Herstellung eines hochschmelzenden pulverförmigen Werkstoffes auf der Grundlage hochschmelzender anorganischer Verbindungen der Metalle der IV. bis VI., VIII Gruppen des Periodischen Systems und einen Reaktor zur Durchführung dieses Verfahrens.

Der nach dem vorliegenden Verfahren hergestellte hochschmelzende pulverförmige Werkstoff kann im Maschinenbau, in der chemischen und der metallurgischen Industrie Verwendung finden.

Zugrundeliegender Stand der Technik

Gegenwärtig wird zur Herstellung von Pulverstoffen ein Verfahren zum Zusammensintern von pulverförmigen Mischungen, die aus Oxiden der Metalle der IV. bis VI. Gruppen des Periodischen System und Nichtmetallen, gewählt aus der Reihe Bor, Silizium, Kohlenstoff, bei einer Temperatur von 1200 bis 2000° C in Öfen mit Schutzgasatmosphäre oder ein Verfahren zur Wärmebehandlung exothermer Mischungen aus den Metallen der IV bis V. Gruppen des Periodischen Systems und den genannten Nichtmetallendurch Verbrennung verwendet. Die gewonnenen hochschmelzenden Werkstoffe, die poröse formlose Sinterkuchen darstellen, werden abgekühlt, gebrochen und zerkleinert und danach nach Fraktionen getrennt. Diese Verfahren zeichnen sich durch eine Vielzahl von Stadien und einen langwierigen technologischen Prozess, eine niedrige Leistung und einen hohen Energie- und Arbeitsaufwand auf. Bei dem Brech- und Zerkleinerungsprozess werden die Pulver der hochschmelzenden Werkstoffe durch verschiedene Beimengungen verunreinigt, die ihre Qualität verschlechtern.

Es ist ein Verfahren zur Herstellung von hochschmelzenden pulverförmigen Werkstoffen (SU, A, 644728) durch Wärmebehandlung einer exothermen Mischung bekannt, die Titan und Kohlenstoff bei einem Verhältnis, das deren Verbrennung in der Reaktionszone mit der Ableitung aus dieser Zone der sich bildenden Wärme und gasförmiger Verbrennungsprodukte gewährleistet, enthält.

Der Reaktor zur Durchführung des Verfahrens enthält ein mit einem Wärmeisolierstoff ausgekleidetes Gehäuse mit einem Stutzen zur Ableitung gasförmiger Verbrennungsprodukte und mit einem Reaktionshohlraum, in dessen Zone er mit einem Kühlsystem ausgestattet ist. Das Gehäuse hat einen abnehmbaren Deckel. Der Reaktor enthält eine mit dem Reaktionsraum verbundene Einrichtung für die Initiierung der Verbrennung der exothermen Mischung in Form einer mit einer Stromquelle verbundenen Wolframwendel. Der Reaktor funktioniert auf folgende Weise. Man beschickt den Reaktionsraum mit der aus Titan und Kohlenstoff bestehenden exothermen Mischung, verdichtet sie und verschliesst das Gehäuse mit dem Deckel. Danach zündet man die Mischung mittels der Wolframwendel lokal an, der man von einer Stromquelle eine Spannung von 40 bis 60 V bei einem Strom von 60 bis 80 A zuführt. Mit der Fortpflanzung der Verbrennungsfront in der exothermen Mischung steigt der Druck im genannten Raum infolge der Ausscheidung gasförmiger Verbrennungsprodukte auf 40 bis 50 MPa an. Durch die Ableitung der Verbrennungsprodukte durch den Rohrstutzen wird der Druck abgebaut. Gleichzeitig wird die Wärme aus dem Raum mit Hilfe des Kühlsystems abgeleitet.

Das sich in Form einer kompakten Masse (Sinterkuchen) bildende Titankarbid wird abgekühlt und so weit zerkleinert, bis es zu Pulver wird, was seine Verunreinigung mit unerwünschten Beimengungen zur Folge hat, und die Leistung des Reaktors ist wegen der Vielzahl von Stadien des Prozesses vermindert. Es wird eine Bildung eines Pulvers dieses Werkstoffes unmittelbar in dem Reaktionsraum durch Einführung in die exotherme Mischung vor der Beschickung des Zielprodukts - des Titankarbids-, das die Temperatur der Synthese herabsetzt, vorgesehen, wodurch eine Sinterung des von neuem zu bildenden Titankarbids verhindert wird. Es sei jedoch bemerkt, dass bei einer solchen Konstruktion des Reaktors die Möglichkeit einer schnellen Entfernung des sich bildenden Pulvers aus den Zonen der hohen Temperaturen ausgeschlossen wird. Folglich wird das Titankarbid einen Sinterkuchen darstellen und nur ein unbedeutender Massenanteil fällt pulverförmig an, d.h., es wird die Möglichkeit ausgeschlossen, dass sich in der Reaktionszone ein Pulver mit einer engen Verteilung der Fraktionszusammensetzung bildet.

Offenbarung der Erfindung

Der Erfindung liegt die Aufgabe zugrunde, ein Verfahren zur Herstellung eines hochschmelzenden pulverförmigen Werkstoffes durch unmittelbare Dispergierung der sich in der Reaktionszone bildanden festen Produkte, die diesem Werkstoff eine schmale Verteilung der Fraktionszusammensetzung bei einer Vereinfachung des technologischen Prozesses ermöglicht, zu entwickeln sowie einen hochleistungsfähigen Reaktor für dessen Durchführung durch Anordnung zusätzlicher konstruktiver Elemente zu schaffen.

Die Aufgabe wird dadurch gelöst, dass ein Verfahren zur Herstellung eines hochschmelzenden pulverförmigen Werkstoffes vorgeschlagen wird, das eine Wärmebehandlung einer exothermen Mischung durch Verbrennung einschliesst, die aus einem aus der Gruppe Bor, Kohlenstoff, Silizium gewählten Nichtmetall und zumindest einem Metall in einem Verhältnis besteht, das deren Verbrennung in der Reaktionszone mit der Ableitung aus dieser Zone der sich bildenden Wärme und gasförmiger Verbrennungsprodukte gewährleistet, bei dem gemäss der Erfindung in der Reaktionszone auf die sich im Verbrennungsprozess bildenden festen Verbrennungsprodukte äussere Kräfte einwirken, und zwar in Richtung nach einer Tangente und/oder einer Normale an die bzw. zu der Oberfläche der genannten Produkte bei einer Temperatur, die in einem Bereich von etwa und unter der Verbrennungstemperatur bis 0,5 ihrer Schmelztemperatur mit der Ableitung des gebildeten hochschmelzenden pulverförmigen Werkstoffs aus der Reaktionszone liegt.

Das erfindungsgemässe Verfahren gestattet es, einen besonders reinen hochschmelzenden pulverförmigen Werkstoff mit einer vorgegebenen schmalen Verteilung der Fraktionszusammensetzung durch Variierung der Einwirkungsintensität der äusseren Kräfte unter Bedingungen eines kontinuierlichen oder periodischen technologischen Betriebs herzustellen.

Die Bedingungen für diesen Prozess wurden auf experimentellem Wege ausgehend von folgenden Voraussetzungen ausgewählt. Die sich in der Reaktionszone bildenden festen Verbrennungsprodukte stellen ein feindisperses Pulver aus einem hochschmelzenden Werkstoff bei einer Temperatur, die nahe der Verbrennungstemperatur liegt, oder einen Sinterkuchen aus den Teilchen eines hochschmelzenden Werkstoffes mit einer geringenmechanischen Festigkeit bei Temperaturen bis 0,5 der Schmelztemperatur dar. Im ersten Falle erfolgt bei der Einwirkung der äusseren Kräfte eine gegenseitige Verlagerung der Teilchen, die deren Sinterung verhindert. Im zweiten Falle findet beim Anlegen von verhältnismässig schwachen äusseren Kräften eine schnelle Zerstörung des Sinterkuchens statt, die dabei zu keiner Verschlechterung der Eigenschaften des hochschmelzenden Werkstoffs führt. Der Prozess der Dispergierung wird unter energetisch günstigen Bedingungen durchgeführt, da dabei die Wärme der Synthese und keine zu hohenKräfte ausgenutzt werden. Da das Pulver fortwährend aus der Reaktionszone herausgeführt wird, findet dessen wiederholte Sinterung nicht statt. Dadurch, dass die Wärme aus der Reaktionszone abgeführt wird, bereitet die Aufrechterhaltung der Temperaturen in dem genannten Bereich keine besonderen Schwierigkeiten. Die Auswahl der Richtung des Angriffs der äusseren Kräfte am hochschmelzenden Werkstoff in Form eines Sinterkuchens ergibt sich augenscheinlich, da dieser einen festen Körper darstellt. Das Pulver des hochschmelzenden Werkstoffs hat auch eine Oberfläche, da es die Reaktionszone ausfüllt, die e n ganz bestimmtes Volumen besitzt. Das Anlegen der äusseren Kräfte nach einer Normalen zu der Oberfläche der festen Produkte kann durch die Einwirkung eines Druckes auf diese erfolgen, und zwar bei Temperaturen, die vorzugsweise nah an 0,5 der Schmelztemperatur liegen, d.h., wenn die Produkte besonders spröde sind. Das Anlegen der äusseren Kräfte nach einer Tangente wird durch Mitteilen einer Drehbewegung gewährleistet. Es ist zweckmässig, die äusseren Kräfte auf die festen Verbrennungsprodukte durch Einwirkung eines Drucks bis l0 MPa einwirken zu lassen und diesen Produkten eine Drehbe wegung mit einer Geschwindigkeit von 6 bis 3l4 rad/s mitzuteilen. Bei einem Druck von über l0 MPa verdichten sich die Verbrennungsprodukte, was einem günstigen Verlauf des Dispergierungsprozesses im Wege steht. Der Wert der unteren Drehgeschwindigkeitsgrenze ist durch den Abfall der Dispergierungseffektivität bedingt. Mit einer Erhöhung der Drehgeschwindigkeit über 3l4 rad/s erhöht sich die Dispergierungsgeschwindigkeit, es erhöht sich aber auch der Energieaufwand, was jedoch unterwünscht ist. Bei der Herstellung hochschmelzender pulverförmiger Werkstoffe mit speziellen Eigenschaften können die Druck- und Geschwindigkeitswerte die genannten Grenzen überschreiten.

Es ist zweckmässig, zwecks Gewährleistung einer maximalen Produktivität des technologischen Prozesses bei einer kontinuierlichen Fahrweise die exotherme Mischung in die Reaktionszone unter einem Druck zuzuführen, der ihre Bewegung in dieser Zone gewährleistet, und eine gemeinsame Herausführung des gebildeten hochschmelzenden pulverförmigen Werkstoffs und der gasförmigen Verbrennungsprodukte aus dieser Zone durhhzuführen. In diesem Falle wird eine gleichmässige Verdichtung der exothermen Mischung gewährleistet,die erforderlich ist, um die Verbrennungsparameter (Verbrennungsgeschwindigkeit, Verbrennungstemperatur) in gegebenen Grenzen aufrechtzuerhalten, was zu der Herstellung eines hochwertigen Werkstoffs beiträgt. Eine konstante Vermischung der exothermen Mischung in der Reaktionszone und danach eine schnelle Herausführung der gebildeten Verbrennungsprodukte aus dieser Zone schliessen die Entstehung hoher Drücke darin aus. Folglich wird bei der Realisierung des Verfahrens unter diesen Bedingungen die grösste Brand- und Explosionssicherheit gewährleistet. Unter Berücksichtigungdes oben Gesagten ist es wünschenswert, dass die Massengeschwindigkeit der Zuführung der exothermen Mischung in die Reaktionszone im wesentlichen der Massengeschwindigkeit ihrer Verbrennung gleich ist. In diesem Falle wird sich in der Reaktionszone eine geringe Menge der genannten Mischung befinden und nach Einstellen der Zufuhr neuer Portionen bricht die Verbrennung schnell ab. Die Massengeschwindigkeit der Verbrennung der Mischung kann mit der linearen Verbrennungsgeschwindigkeit durch folgende Beziehung ausgedrückt werden:

$m = V \cdot Sp \cdot \rho$ , worin

V . lineare Verbrennungsgeschwindigkeit, die in der Regel in einem Bereich von $10^{-3}$ bis $10^{-1}$ m/s liegt; Sp-Querschnittsfläche der Reaktionszone, $m^2$; $\rho$ - Dichte der exothermen Mischung, $kg/m^3$ bedeuten.

Bei Gleichheit der Massengeschwindigkeiten der Zuführung und der Verbrennung bleibt die Verbrennungsfront in einem gewissen Querschnitt der Reaktionszone stillstehen. Durch Erhöhung oder Verminderung der Zuführungsgeschwindigkeit der exothermen Mischung ist es möglich, die Verbrennungsfront der Angriffstelle der äusseren Kräfte an den festen Verbrennungsprodukten näher oder von dieser weiter entfernt zu verlagern, wobei man dadurch die Zeitspanne von dem Verbrennungsmoment bis zur Dispergierung und demzufolge die Temperatur, bei der die Dispergierung verläuft, ändert. Zur Erweiterung des Sortiments der herzustellenden hochschmelzenden pulverförmigen Werkstoffe und Verbesserung ihrer Qualität (vollständige Beseitigung von Beimengungen) ist es zweckmässig, die Wärmebehandlung der exothermen Mischung im Medium eines inerten Gases oder eines mit der Mischung zusammenwirkenden Gases durchzuführen. Zur Regelung des Verbrennungsprozesses und Herstellung hochschmelzender pulverförmiger Werkstoffe verschiedener Zweckbestimmung ist es wünschenswert, eine exotherme Mischung zu verwenden, die als Metall ein Metall der IV. bis VI., VIII Gruppen des Periodischen Systems sowie, einzeln oder zusammen genommen, Karbid, Borid, Silizid zumindest eines der genannten Metalle oder Nitrid, Oxyd zumindest eines Elementes, das aus den der III. bis V. Gruppe des Periodischen Systems gewählt ist, enthält.

Die Aufgabe wird auch dadurch gelöst,das zur Durchführung des genannten Verfahrens ein Reaktor vorgeschlagen wird, der ein mit Wärmeisolierstoff ausgekleidetes und mit einem Kühlsystem ausgestattetes Gehäuse mit einer Öffnung zur Ableitung gasförmiger Verbrennungsprodukte und einem Reaktionsraum und eine mit dem genannten Reaktionsraum verbundene Einrichtung für die Initiierung der Verbrennung der exothermen Mischung enthält, bei dem gemäss der Erfindung im Innern des Gehäuses in den Stirnenden längs dessen Achse eine Einrichtung für die Zuführung der exothermen Mischung in den Rektionsraum bei einem Druck, bei dem deren Bewegung in diesem Reaktionsraum gewährleistet wird, und ein Rotor mit einem Aufsatz aus einem hochschmelzenden verschleissfesten Werkstoff angeordnet sind, die mit dem Reaktionsraum in Verbindung stehen, wobei die äussere Fläche des Aufsatzes mit der inneren ausgekleideten Fläche des Gehäuses einen ringförmigen, mit der genannten Öffnung verbundenen Spalt zur Ableitung des pulverförmigen hochschmelzzenden Werkstoffs und der gasförmigen Verbrennungsprodukte bildet.

Der erfindungsgemässe Reaktor gewährleistet die Herstellung eines hochschmelzenden pulverförmigen Werkstoffs mit der erforderlichen Dispersität und vorgegebenen Gebrauchseigenschaften sowie einem hohen Reinheitsgrad. Er zeichnet sich aus durch eine hohe Leistung bei einer hohen Brand- und Explosionssicherheit. Er kann sowohl in einer kontinuierlichen, als auch in einer periodischen Fahrweise betrieben werden.

Es ist zweckmässig, die Einrichtung für die Zuführung der exothermen Mischung in Form einer Schnecke auszuführen, die im Gehäuse drehbar in der der Drehrichtung des Rotors gegenläufigen Richtung angeordnet ist. In diesem Falle wird eine maximale Explosionssicherheit des Prozesses erzielt, da die Verbrennungsfront beim Erreichen der Schnecke in deren Rillen infolge einer intensiven Wärmeableitung erlischt. Es ist zweckmässig, dass die innere ausgekleidete Fläche des Gehäuses und die einander zugewandten Stirnflächen des Aufsatzes und der Schnecke den Reaktionsraum bilden. Dies gestattet es, eine gleichmässige Dispergierung über das gesamte Volumen des genannten Reaktionsraums durchzuführen.

Zur Gewährleistung der günstigsten Bedingungen für die Herstellung eines monodispersen Pulvers wird es empfohlen, den Rotoraufsatz in Form eines Drehkörpers auszubilden, dessen Seitenfläche, die den Spalt bildet, die Form eines Zylinders und dessen Stirnfläche die Form eines Kegels mit dem Reaktionsraum zugewandter Spitze hat. Im Falle der Durchführung des Wärmebehandlungsprozesses in einem Gasmedium ist das Gehäuse mit einem mit dem Reaktionsraum verbundenen Rohrstutzen für die Zuführung des Gasmediums auszustatten.

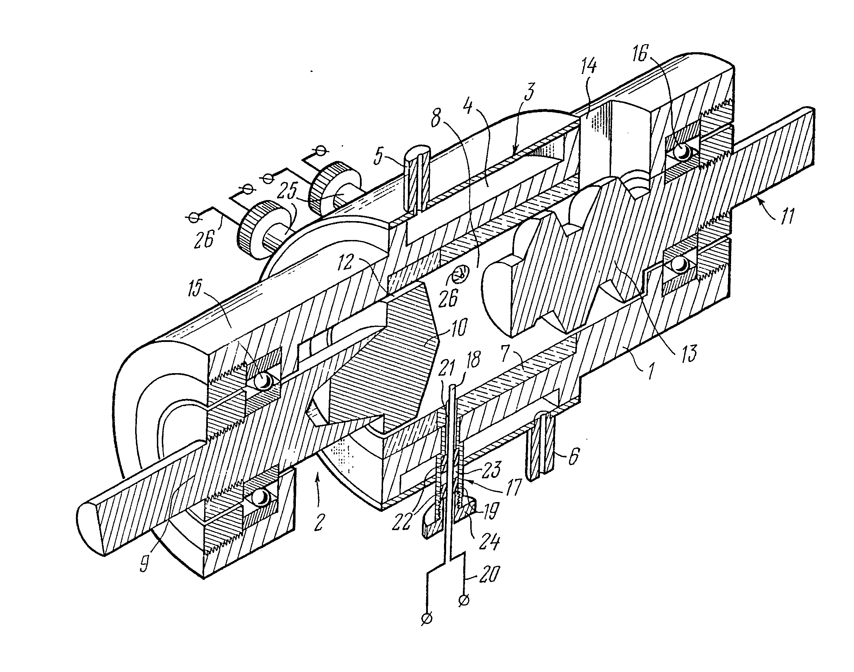

### Kurze Beschreibung der Zeichnung

Nachstehend wird die Erfindung an Hand einer ausführlichen Beschreibung des erfindungsgemässen Verfahrens und des erfindungsgemässen Reaktors für die Herstellung eines hochschmelzenden pulverförmigen Werkstoffes unter Bezugnahme auf die Zeichnung, in der der erfindungsgemässe Reaktor im Längsschnitt in Axonometrie dargestellt ist, näher erläutert.

### Bevorzugte Ausführungsbeispiele der Erfindung

Der erfindungsgemässe Reaktor (siehe Zeichnung) enthält ein zylindrisches Gehäuse I mit einer Öffnung 2 zur Ableitung eines hochschmelzenden pulverförmigen Werkstoffs und gasförmiger Verbrennungsprodukte. Das Gehäuse ist an seiner Aussenfläche mit einem Kühlsystem 3, das in Form eines Kühlmantels 4 mit Stutzen 5, 6 für die Zuführung bzw. Ableitung einer Kühlflüssigkeit (Wasser) ausgeführt ist, und an der Innenfläche mit einer Auskleidung 7 aus einem verschleissfesten hochschmelzenden Werkstoff versehen, was das Gehäuse I gegen Einwirkung hoher Temperaturen der Verbrennungsreaktion und den abrasiven Verschleiss infolge der Dispergierung fester Produkte der Synthese schützt. Im Innern des Gehäuses I befindet sich ein Reaktionsraum 8, der in Axialrichtung an den Stirnenden begrenzt ist von einem seitens der Öffnung 2 installierten Rotor 9 mit einem in ihn eingepressten Aufsatz I0 aus einem hochschmelzenden verschleissfesten Werkstoff und einer Einrichtung II für die Zuführung einer exothermen Mischung in den Reaktionsraum 8 unter Druck, der die Bewegung der letzteren in den Hohlraum 8 gewährleistet. Die Aussenfläche des Aufsatzes I0 bildet mit der ausgekleideten Innenfläche des Gehäuses I einen ringförmigen Spalt I2 zur Ableitung des hochschmelzenden pulverförmigen Werkstoffs und der gasförmigen Verbrennungsprodukte aus dem Hohlraum 8. Der Spalt I2 ist mit der Offnung 2 verbunden. Die Einrichtung II kann in Abhängigkeit von der Betriebsführung des Reaktors in Form eines Plungers (nicht dargestellt) ausgeführt sein, wobei die Aufgabe der Mischung in Form zusammengepresster Zylinder seitens des Stirnendes des Gehäuses I erfolgt. Die Einrichtung II (s. Fig. ) ist in Form einer Schnecke I3 ausgeführt, auf deren Seite im Gehäuse I ein Fenster I4 zur Zuführung der exothermen Mischung vorhanden ist. Die Schnecke I3 verhindert dank einer intensiven Wärmeabführung eine Fortpflanzung der Verbrennungsfront aus der Reaktionszone in die Beschickungszone, wodurch eine Brand- und Explosionsgefahr beseitigt wird. Bei dem vorliegenden Ausführungsbeispiel wird der Hohlraum 8 durch die innere ausgekleidete Fläche des Gehäuses I und die einander zugewandten Stirnflächen des Aufsatzes I0 und der Schnecke I3 gebildet. Dadurch werden optimale Bedingungen für eine gleichmässige Dispergierung fester Verbrennungsprodukte geschaffen. Mit dem gleichen Ziel ist der Aufsatz I0 in Form eines Drehkörpers ausgebildet, dessen Seitenfläche, die den Spalt I2 bildet, eine zylindrische Form und dessen Stirnfläche die Form eines Kegels mit dem Reaktionsraum zugewandter Spitze aufweist. Ein solcher Aufsatz I0 gewährleistet für das erzeugte Pulver eine schmale Verteilung der Fraktionszusammensetzung, d.h. eine Monodispersität. Der Rotor 9 und die Schnecke I3 sind im Gehäuse I in Wälzlagern I5 bzw. I6 gelagert und an elektrische Antriebe (nicht dargestellt) angeschlossen; dadurch haben sie die Möglichkeit, Drehbewegungen mit bedeutenden Winkelgeschwindigkeiten, die zur Dispergierung und Zuführung in den Hohlraum 8 der exothermen Mischung mit einer bestimmten Massengeschwindigkeit unter Druck erforderlich sind, auszuführen. Der Rotor 9 und die Schnecke I3 rotieren gegenläufig und ihre Drehgeschwindigkeiten werden in Abhängigkeit von der Lage der Verbrennungsfront mit Hilfe eines Systems zur automatischenRegelung (nicht dargestellt) geregelt. Ein solches System wird in dem Buch von Malov A.N., Ivanov Ju.V. "Grundlagen der Automatik und der Automatisierung der Produktionsprozesse", Moskau, 1974, beschrieben.

Der Reaktor enthält eine mit dem Hohlraum 8 verbundene Einrichtung I7 zum Initiieren der Verbrennung der exothermen Mischung. Diese Einrichtung I7 besteht aus einer Wolframwendel I8, die in einem im Gehäuse I ausgeführten Stutzen I9 untergebracht ist. Mit ihrem einen Ende geht die Wendel in den Hohlraum 8 hinein, die zwei anderen Enden sind an eine Stromquelle 20 angeschlossen. Die Wendel ist in dem Stutzen I9 mittels eines Keramikrohres 2I, das durch Einsätze 22 bzw. 23 isoliert und abgedichtet ist, befestigt. Das Rohr 2I ist im Stutzen I9 mit Hilfe eines Gewindestopfens 24 festgelegt, der im Notfall ein Zusammendrücken der Zwischenlage 23 gewährleistet und dadurch den Hohlraum 8 gegen die Umgebung isoliert. In jedem der Stutzen 25 des Gehäuses I ist ähnlich, wie für die Wendel I8 beschrieben, ein Thermoelement 26 montiert, dessen eines Ende in den Hohlraum 8 eingeführt ist, die zwei anderen sind an die entsprechenden Eingänge des oben genannten Systems angeschlossen. Jedes der Thermoelemente 26 ist in einer zur Längsachse des Gehäuses 1 rechtwinkligen Ebene angeordnet.

Der Reaktor wird wie folgt betrieben. Vor dem Einschalten des Reaktors werden die Drehgeschwindigkeit des Rotors 9 mit dem Aufsatz I0 in Abhängigkeit von der benötigten Dispersität des zu erzeugenden Pulvers und die Drehgeschwindigkeit der Schnecke I3, die durch die Massengeschwindigkeit der Mischungszuführung bestimmt wird, vorgegeben. Dann wird der Kühlmantel 4 angeschlossen, in dem Kaltwasser, das in den Stutzen 5 eintritt und durch den Stutzen 6 herausgeführt wird, umläuft. Auf Befehl "Start" werden die Elektroantriebe des Rotors 9 mit dem Aufsatz I0 und der Schnecke I3 sowie der Stromquelle 20. an deren Klemmen die Enden der Wendel I8 angeschlossen sind, eingeschaltet. Man gibt die exotherme Mischung, die zumindest ein Metall, gewählt aus den IV. bis VI. VIII Gruppen des Periodischen Systems und ein Nichtmetall, gewählt aus der Reihe Bor. Kohlenstoff, Silizium enthält, durch das Fenster I4 in die Schraubennut der mittels eines Elektroantriebes angetriebenen Schnecke I3 auf, die sie mit einer bestimmten Geschwindigkeit und einem bestimmten Druck in den Reaktionsraum 8 einführt. Der durch die Schnecke I3 erzeugte Druck gewährleistet eine Bewegung der exothermen Mischung durch den Hohlraum 8. Sobald die Mischung die durch die Einwirkung des von der Stromquelle 20 zugeführten elektrischen Stroms zum Glühen gebrachte Wolframwendel I8 erreicht hat, wird in ihr eine Verbrennungsreaktion lokal initiiert. Nach einem kurzzeitigen Ubergangsprozess entsteht in der exothermen Mischung eine Verbrennungsfront, die in der zur Längsachse des Gehäuses I perpendikulären Ebene liegt.

Zur Durchführung des Verfahrens in einer kontinuierlichen Fahrweise und Optimierung des Dispergierungsprozesses in einem Temperaturbereich von etwa und unter der Verbrennungstemperatur und bis 0,5 der Schmelztemperatur ist es erforderlich, dass sich die Verbrennungsfront in einem bestimmten Abstand vom Aufsatz I0 des Rotors 9 befindet. Hierzu ist es nötig. dass die Massengeschwindigkeit der Zuführung der exothermen Mischung im wesentlichen der Massengeschwindigkeit der Verbrennung, bestimmt durch die Zusammensetzung der Mischung, gleich ist. Bei bedeutenden Verbrennungsgeschwindigkeiten verdünnt man die exotherme Mischung mit solchen inerten Produkten, wie Karbide, Boride, Silizide der Metalle der IV. bis VI., VIII Gruppen des Periodischen Systems oder Oxide und Nitride der Elemente der III. bis V. Gruppen des Periodischen Systems. Die Lage der Verbrennungsfront wird durch die Thermoelemente 25 ermittelt, deren Signale an das obengenannte automatische System (nicht dargestellt) übertragen werden, in dem Signale zur Einwirkung auf den Rotor 9 und die Schnecke I3 erzeugt werden, infolgedessen ihre Geschwindigkeiten geändert werden. Bei der Fortpflanzung der Verbrennungsfront in Richtung zu der Schnecke I3 bin ist deren Drehgeschwindigkeit entsprechend zu erhöhen. Auf die sich bildenden festen Verbrennungsprodukte in Form eines spröden Sinterkuchens oder eines feindispersen Pulvers wirkt man mit einem Druck ein, der durch die Schnecke I3 erzeugt und über die exotherme Mischung übertragen wird. Unter der Einwirkung dieses Drucks werden die festen Verbrennungsprodukte gegen den Aufsatz I0 des Rotors 9 gepresst, der von einem Elektroantrieb in der der Drehrichtung der Schnecke I3 gegenläufigen Richtung in Drehbewegung versetzt wird. Sie werden in Drehbewegung versetzt, dabei werden sie der Einwirkung äusserer Kräfte, die nach einer Tangente an ihre Oberfläche gerichtet sind, ausgesetzt. Infolge einer gleichzeitigen Einwirkung der äusseren Kräfte, die nach einer Tangente und einer Normale an bzw. zu ihrer Oberfläche gerichtet sind, auf die festen Verbrennungsprodukte findet eine Dispergierung derselben statt. Indem man die Drehgeschwindigkeit des Rotors 9 und der Schnecke I3 ändert, regelt man die Grösse dieser Kräfte. d.h., dadurch wird ein Pulver einer bestimmten Fraktionszusammensetzung gewonnen. Die Aufrechterhaltung der Temperaturen in dem genannten Bereich im Hohlraum 8 wird durch die Intensität der Wärmeableitung mittels des Kühlmantels 4 gewährleistet. Das gebildete Pulver wird durch den Spalt I2 hindurchgedrückt und über die Öffnung 2 aus dem Reaktor herausgeführt. Die sich während des Verbrennungsprozesses ausscheidenden Beimengungsgase werden zusammen mit dem hochschmelzenden pulverförmigen Werkstoff durch den Spalt I2 und die Öffnung 2 entfernt, wodurch optimale Bedingungen für die Herausführung des letzteren und die Kontinuität des Prozesses gewährleistet werden.

Beispiel I

Man beschickt den Reaktionsraum 8 mit einem Durchmesser von 0,05 m eines zylindrischen Reaktors mit einer exothermen Mischung, die aus I kg Titanpulver mit einer Teilchengrösse von $< 1 \cdot 10^{-4}$ m und 0,254 kg Kohlenstoffpulver mit einer Teilchengrösse von $< 1 \cdot 10^{-6}$ m besteht, mit Hilfe einer Viergangschnecke I3 mit einem Durchmesser von 0.05 m, einer Steigung von 0,058 m, einer Rillentiefe von 0,013 m und einer Breite von 0,006 m. Bei ihrer Bewegung im Hohlraum 8 wird die Mischung lokal mit Hilfe der Wolframwendel I8 entzündet, der ein Strom von 60 bis 80 A unter einer Spannung von 40 bis 60 V zugeführt wird. Die Lage der Verbrennungsfront wird durch zwei Thermoelemente 25 ermittelt. In Abhängigkeit von ihrer Lage gestattet das System der automatischen Steuerung es, die Drehgeschwindigkeit der Schnecke I3 von 0 bis 62,8 rad/s und des Rotors 9 von I0 bis 3I4 rad/s stufenlos einzustellen. Die Durchschnittsdrehgeschwindigkeiten der Schnecke I3 und des Rotors 9 betragen 40 rads bzw. I50 rad/s. Das sich bildende Titankarbid in Form eines spröden Sinterkuchens wird unter Einwirkung des Drucks von

der Schnecke I3. der durch die exotherme Mischung übertragen wird, gegen den Aufsatz I0 des umlaufenden Rotors 9 und unter Wirkung der Reibkräfte, die nach einer Tangente an die Oberfläche des Sinterkuchens wirken, gepresst. Es findet eine Dispergierung des Sinterkuchens statt. Die Dispergierung wird bei Aufrechterhaltung der Temperaturen in einem Bereich von I500 bis 2000°C durchgeführt. Die sich bildenden gasförmigen Verbrennungsprodukte und das feindisperse Pulver des Titankarbids mit einer spezifischen Fläche von $0,33 \cdot 10^3$ m²/kg mit einer Teilchengrösse von weniger als $2 \cdot 10^{-5}$ m (97.7%) werden durch den Spalt I2 (Grösse $10^{-3}$ m) durchgedrückt. Nach 320 s konnten I.25 kg Titankarbid gewonnen werden. Die Leistung des Reaktors beträgt 0.04 kg/s.

Beispiel 2

Der Prozess wird in einem Reaktor, wie in Beispiel I beschrieben. durchgeführt. Man verwendet eine exotherme Mischung mit einer Dichte von $\rho = 1.8 \cdot 10^3$ kg/m² die aus 8 kg Titanpulver mit einer Teilchengrösse von $< 1 \cdot 10^{-4}$ m und 2 kg Kohlenstoffpulver mit einer Teilchengrösse von $< 1 \cdot 10^{-6}$ m besteht. Die Mischung wird in den Hohlraum 8 mit einem Durchmesser von $2,5 \cdot 10^{-2}$ m mit einer Massengeschwindigkeit von $1,1 \cdot 10^{-3}$ kg/s, die der Massenverbrennungsgeschwindigkeit dieser Mischung bei V = 1,25 m/s gleich ist, zugeführt. Im Laufe von 9I0 s werden I0 kg Titankarbidpulver mit einer spezifischen Oberfläche von $0,33 \cdot 10^3$ m²/g gewonnen, von dem 98 % eine Teilchengrösse von weniger als $2 \cdot 10^{-5}$ m hat. Die Leistung des Reaktors beträgt 0,0I kg/s.

Zur Festlegung der Verbrennungsfront in der vorgegebenen Lage wird mit Hilfe des Steuersystems die Drehgeschwindigkeit der Schnecke I3 und des Rotors 9 von 50 rad/s bzw. I57 rad/s aufrechtgehalten. Die Dispergierung wird bei Aufrechterhaltung der Temperaturen in einem Bereich von I500 bis 2000°C durchgeführt.

Beispiel 3

Man führt in den Reaktionsraum 8 eines Reaktors ein Pellet mit einem Durchmesser von 0,025 m ein, das aus 0,095 kg Titanpulver mit einer Teilchengrösse von weniger als $1 \cdot 10^{-4}$ und 0,245 kg Kohlenstoffpulver mit einer Teilchengrösse von weniger als $1 \cdot 10^{-6}$ m zusammengepresst ist. Das Pellet wird lokal mit Hilfe der Wolframwendel I8 angezündet und man wirkt auf den gebildeten Sinterkuchen bei einer Temperatur von I600°C mit einem Plungerdruck von I0 MPa ein. Man erhält 0.I195 kg Titankarbid. das zu 98% eine Teilchengrösse von weniger als $2 \cdot 10^{-5}$ m hat.

Beispiel 4

Aus einer exothermen Mischung. die 0.479 kg Titanpulvermit einer Teilchengrösse von weniger als $1 \cdot 10^{-4}$ m und 0,I20I kg Kohlenstoffpulver mit einer Teilchengrösse von weniger als $1 \cdot 10^{-6}$ m enthält, werden I0 Zylinder mit einem Durchmesser von $2,5 \cdot 10^{-3}$ m und einer. Länge von $5 \cdot 10^{-2}$ m bei einem Druck von I00 MPa gepresst. Dann führt man zwei Zylinder mit Hilfe eines Plungers durch eine in der Stirnwand des Gehäuses I ausgebildete Offnung in den Reaktionsraum 8 mit einem Durchmesser von $2,5 \cdot 10^{-3}$ ein. Man füllt die Reaktionszone mit Argon und hält einen Druck von I,5 MPa aufrecht. Der dem Aufsatz des Rotors am nächsten liegende Zylinder wird mit Hilfe der Wolframwendel I8 beim Fließen eines Stroms von 60 bis 80 A mit einer Spannung von 40 bis 60 V angezündet. Gleichzeitig werden die Zylinder durch den Plunger geben den Aufsatz I0 des Rotors 9, der sich mit einer Geschwindigkeit von 3I,4 rad/s dreht, angedrückt. Der Druck des Plungers auf die Zylinder beträgt 0,5 MPa. Das sich als Sinterkuchen bildende Titankarbid wird unter Wirkung der äusseren Kräfte, die nach einer Normale (Druck) und nach einer Tangente (Reibkraft vom rotierenden Rotor) gerichtet sind,zu einem Pulver mit einer spezifischen Oberfläche von $0,33 \cdot 10^3$ m²/kg dispergiert. das zu 98% eine Teilchengrösse von weniger als $2 \cdot 10^{-5}$ m hat. Die Dispergierung wird bei Aufrechterhaltung der Temperaturen in einem Bereich von I500 bis 2000°C durchgeführt. In dem Maße, wie der erste Zylinder durchbrennt, dispergiert wird und das Pulver durch den Spalt I2 mit einer Grösse von $1 \cdot 10^{-6}$ m entfernt wird, wird der zweite Zylinder mittels des Plungers in Richtung zu dem Aufsatz 9 des Rotors I0 hin verschoben, wobei dieser Zylinder von dem ersten angezündet wird. Dann führt man in den Reaktionsraum 8 den dritten Zylinder ein. Der Prozess wiederholt sich. Gleichzeitig mit dem Pulver führt man aus dem Hohlraum 8 durch den Spalt I2 gasförmige Verbrennungsprodukte heraus. Im Laufe von I80 s konnten 0,599 kg Titankarbid pulver gewonnen werden. Die Leistung des Reaktors beträgt $3,3 \cdot 10^{-3}$ Kg/s.

In der Tabelle sind weitere Durchführungsbeispiele des Verfahrens in dem im Beispiel 4 beschriebenen Reaktor unter Angabe der Ausgangszusammensetzung der exothermen Mischung, der Prozessbedingungen, der Fraktionszusammensetzung des gewonnenen hochschmelzenden pulverförmigen Werkstoffes dargestellt.

Tabelle

| Lfd. Nr. | Exotherme Mischung | | Komponententeilchengrösse der exothermen Mischung unter x 10⁶ m | Gasmedium | Gasmediumdruck, MPa | Rotordrehgeschwindigkeit, rad/s |
| | Ausgangskomponenten | Gehalt, x $10^{-3}$ kg | | | | |
|---|---|---|---|---|---|---|
| I | 2 | 3 | 4 | 5 | 6 | 7 |
| 5 | Ti | 479 | 100 | Ar | 0,15 | 31.4 |
| | C | 120,1 | 1 | | | |
| 6 | Ti | 479 | 100 | Ar | 0.15 | 31 4 |
| | C | 120,1 | 1 | | | |
| 7 | Ti | 479 | 100 | Ar | 0,15 | 314 |
| | C | 120,1 | 1 | | | |
| 8 | Ti | 479 | 100 | Ar | 0,15 | 6,28 |
| | C | 120,1 | 1 | | | |
| | TiC | 100 | 20 | | | |
| 9 | Hf | 1784 | 100 | Luft | 0,1 | 97,6 |
| | B | 216 | 10 | | | |
| 10 | Hf | 1784 | 100 | Ar | 0,15 | 314 |
| | B | 216 | 10 | | | |
| | HfB$_2$ | 250 | 60 | | | |
| 11 | Nb | 930 | 100 | N$_2$ | 2.2 | 314 |
| | C | 2,4 | 1 | | | |
| 12 | Ta | 1810 | 100 | N$_2$ | 3 | 314 |
| | C | 8,4 | 1 | | | |

Fortsetzung der Tabelle

| I | 2 | 3 | 4 | 5 | 6 | 7 |
|---|---|---|---|---|---|---|
| I3 | Co | 589 | I00 | Ar | 0,I | 3I,4 |
|  | Si | 280 | 50 |  |  |  |
| I4 | W | I838 | I00 | Ar | 0,I | 3I,4 |
|  | C | I2,0I | I |  |  |  |
| I5 | Ti | 479 | I00 | Ar | 0,I | 3I,4 |
|  | C | I20,I | I |  |  |  |
|  | ZrN | I05 | 20 |  |  |  |
| I6 | Ti | 479 | I00 | Ar | 0,I | 3I,4 |
|  | C | I20,I | I |  |  |  |
|  | $Al_2O_3$ | I02 | 20 |  |  |  |
| I7 | Ti | 479 | I00 | Ar | 0,I | 3I,4 |
|  | C | I20,I | I |  |  |  |
|  | TiO | 64 | 20 |  |  |  |
| I8 | V | 509 | I00 | Ar | 0,I | 3I,4 |
|  | C | I20,I | I |  |  |  |
|  | VO | I7 | 20 |  |  |  |
| I9 | Ti | 479 | I00 | $N_2$ | 0,I | 3I,4 |
|  | C | I20,I | I |  |  |  |
|  | AlC | 43 | 20 |  |  |  |
| 20 | Ti | 479 | I00 | $N_2$ | 0,I | 3I,4 |
|  | C | I20,I | I |  |  |  |
|  | TiN | 52 | 20 |  |  |  |
| 2I | Ti | 479 | I00 | $N_2$ | 0,I | 3I,4 |
|  | C | I20,I | I |  |  |  |
|  | VN | 65 | 20 |  |  |  |
| 22 | Ti | 479 | I00 | Ar | 0,I | 3I,4 |
|  | Ta | I809 | I00 |  |  |  |
|  | C | 2402 | I |  |  |  |

Fortsetzung der Tabelle

| Lfd. Nr. | Plunger-druck, MPa | Temperatur-bereich des Dispergier-prozesses, °C | Phase des hoch-schmelzenden Werkstoffs | Teilchengrösse des hochschmel-zenden pulver-förmigen Werk-stoffs, x $10^6$ m (98% der Ge-samtmasse) |
|---|---|---|---|---|
| I | 8 | 9 | IO | II |
| 5 | 0,5 | I600 bis 2200 | TiC | 20 |
| 6 | 0,5 | T600 bis 2200 | TiC | 20 |
| 7 | 0,5 | I600 bis 1800 | TiC | 20 |
| 8 | 0,5 | I600 bis 2000 | TiC | 20 |
| 9 | 0,5 | T500 bis 2000 | $HfB_2$ | 60 |
| IO | 0,3 | I500 bis I800 | $HfB_2$ | 60 |
| II | 0,8 | I400 bis 2500 | $NbC_{0,I}N_{0,59}$ $Nb_2C$ | 40 |
| T2 | I | I900 bis 3800 | $TaC_{0.5}N_{0.39}$ | 50 |
| I3 | 0,5 | I500 bis I900 | CoSi | 50 |
| I4 | I | 2400 bis 2800 | WC TiC | 40 |
| I5 | 0,3 | I600 bis I800 | ZrN TiC | 20 |
| I6 | 0,3 | I600 bis I800 | $Al_2O_3$ | 20 |
| I7 | 0,3 | T600 bis T800 | TiC TiO | 20 |
| I8 | 0,5 | I400 bis 2000 | VC VO | 20 |
| I9 | 0,5 | I600 bis I800 | TiC AlN TiC | 20 |
| 20 | 0,3 | I600 bis I800 | TiN TiC | 20 |
| 2I | 0,3 | I600 bis I800 | WN | 20 |
| 22 | 0,5 | I600 bis 2000 | TiC TaC | 40 |

EP 0 425 668 A1

Industrielle Anwendbarkeit

Der nach dem erfindungsgemässen Verfahren hergestellte hochschmelzende Sinterwerkstoff kann im Maschinenbau, in der chemischen und in der metallurgischen Industrie Verwendung finden.

**Ansprüche**

1. Verfahren zur Herstellung eines hochschmelzenden pulverförmigen Werkstoffes, das eine Wärmebehandlung einer exothermen Mischung durch Verbrennung einschliesst, die aus einem aus der Gruppe Bor, Kohlenstoff. Silizium gewählten Nichtmetall und zumindest einem Metall in einem Verhältnis besteht, das deren Verbrennung in der Reaktionszone mit der Ableitung aus dieser Zone der sich bildenden Wärme und gasförmiger Verbrennungsprodukte gewährleistet, dadurch **gekennzeichnet**, dass in der Reaktionszone auf die sich im Verbrennungsprozess bildenden festen Verbrennungsprodukte äussere Kräfte einwirken, und zwar in Tangenten- und/oder Normalenrichtung male an die bzw. zu der Oberfläche der genannten Produkte bei einer Temperatur, die in einem Bereich von etwa und unter der Verbrennungstemperatur bis 0,5 ihrer Schmelztemperatur mit der Ableitung des gebildeten hochschmelzenden pulverförmigen Werkstoffs aus der Reaktionszone liegt.

2. Verfahren nach Anspruch I, dadurch **gekennzeichnet**. dass die Einwirkung der äusseren Kräfte auf die festen Verbrennungsprodukte durch Einwirkung eines Drucks bis zu I0 MPa und Mitteilung einer Drehbewegung mit einer Geschwindigkeit von 6 bis 3l4 rad/s vorgenommen wird.

3. Verfahren nach Anspruch I, dadurch **gekennzeichnet**, dass man in die Reaktionszone eine exotherme Mischung unter einem Druck zuführt, der ihre Bewegung in dieser Zone gewährleistet, und eine gemeinsame Herausführung aus dieser Zone des gebildeten hochschmelzenden pulverförmigen Werkstoffs und der gasförmigen Verbrennungsprodukte durchführt.

4. Verfahren nach Anspruch 3, dadurch **gekennzeichnet**, dass die Massengeschwindigkeit der Zuführung der exothermen Mischung in die Reaktionszone im wesentlichen der Massengeschwindigkeit ihrer Verbrennung gleich ist.

5. Verfahren nach Anspruch I, dadurch **gekennzeichnet**, dass die Wärmebehandlung der exothermen Mischung durch Verbrennung im Medium eines inerten Gases oder eines mit ihr in Wechselwirkung stehenden Gases durchgeführt wird.

6. Verfahren nach Anspruch I, dadurch **gekennzeichnet**, dass man eine exotherme Mischung verwendet, die als Metall ein Metall der IV. bis VI., VIII Gruppen des Periodischen Systems enthält.

7. Verfahren nach Anspruch 6, dadurch **gekennzeichnet**, dass man eine exotherme Mischung verwendet, die zusätzlich, einzeln oder in Mischung genommen, Karbid, Borid, Silizid zumindest eines Metalls, das aus den IV. bis VI., VIII Gruppen des Periodischen Systems gewählt ist, enthält.

8. Verfahren nach Anspruch 6, dadurch **gekennzeichnet**. dass man eine exotherme Mischung verwendet, die, einzeln oder in Mischung genommen, Oxid, Nitrid zumindest eines Elementes, das aus den III. bis V. Gruppen des Periodischen Systems gewählt ist, enthält.

9. Reaktor zur Durchführung des Verfahrens nach Anspruch 3 der ein mit einem Wärmeisolierstoff ausgekleidetes und mit einem Kühlsystem (3) ausgestattetes Gehäuse (I) mit einer Offnung (2) zur Ableitung gasförmiger Verbrennungsprodukte und einen Reaktionsraum (8) und eine mit dem genannten Hohlraum (6) verbundene Einrichtung (I7) zur Initiierung der Verbrennung der exothermen Mischung enthält, dadurch **gekennzeichnet**, dass im Innern des Gehäuses (I) in den Stirnenden längs dessen Achse eine Einrichtung (II) für die Zuführung der exothermen Mischung in d en Reaktionsraumbei einem Druck, bei dem deren Bewegung in diesem Hohlraum (8) gewährleistet wird, und ein Rotor (9) mit einen Aufsatz (I0) aus einem hochschmelzenden verschleissfesten Werkstoff angeordnet sind, die

11

mit dem Reaktionsraum in Verbindung stehen, wobei die äussere Fläche des Aufsatzes (l0) mit der inneren ausgekleideten Fläche des Gehäuses (l) einen mit der genannten Offnung (2) verbundenen ringförmigen Spalt (l2) zur Ableitung des pulverförmigen hochschmelzenden Werkstoffs und der gasförmigen Verbrennungsprodukte bildet.

10. Reaktor nach Anspruch 9. dadurch **gekennzeichnet.** dass die Einrichtung (ll) zur Zuführung der exothermen Mischung in Form einer Schnecke (l3) ausgeführt ist. die im Gehäuse (l) drehbar in zur Drehrichtung des Rotors (9) gegenläufiger Richtung angeordnet ist.

11. Reaktor nach Anspruch l0. dadurch **gekennzeichnet,** dass die innere ausgekleidete Fläche des Gehäuses (l) und die einander zugewandten Stirnflächen des Aufsatzes (l0) und der Schnecke (l3) den Reaktionsraum (8) bilden.

12. Reaktor nach Anspruch 9, dadurch **gekennzeichnet,** dass der Aufsatz (l0) des Rotors (9) in Form eines Drehkörpers ausgeführt ist, dessen Seitenfläche, die den Spalt (l2) bildet, die Form eines Zylinders und dessen Stirnfläche die Form eines Kegels mit dem Reaktionsraum (8) zugewandter Spitze hat.

# INTERNATIONAL SEARCH REPORT

International Application No PCT/SU 89/00085

**I. CLASSIFICATION OF SUBJECT MATTER** (if several classification symbols apply, indicate all) [6]

According to International Patent Classification (IPC) or to both National Classification and IPC

$Int.Cl.^5$    B 22 F 9/16, C 01 B 31/30,33/06,31/34,35/04,21/06

**II. FIELDS SEARCHED**

| Minimum Documentation Searched [7] | |
|---|---|
| Classification System | Classification Symbols |
| $Int.Cl.^4$ | C 01 B 31/30,31/34,33/06,35/04,21/06, B 22 F 9/16 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | US, A, 3507616 (Joseph M. Tobin et al) 21 April 1970 (21.04.70), the claims | 1 |
| A | US, A, 3726643 (Alexandr Grigorievich Merzhanov et al), 10 April 1973 (10.04.73), the claims | 1,7 |
| A | SU, A1, 383362 (R.A. Andrievsky et al.), 4 March 1974 (04.03.74), the claims | 7 |
| A | SU, A1, 55959 (A.V. Tikhonov), 31 October 1939 (31.10.39), the claims | 8 |
| A | SU, A1, 431253 (Otdelenie ordena Lenina instituta khimicheskoi fiziki), 30 April 1975 (30.04.75) the claims | 8 |
| A | SU, A1, 608303 (Institut khimicheskoi fiziki AN Armyanskoi SSR), 23 December 1981 (23.12.81), the claims    ---    ./. | 1,7 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 2 November 1989 (02.11.89) | 15 December 1989 (15.12.89) |
| International Searching Authority | Signature of Authorized Officer |
| ISA/SU | |

Form PCT/ISA/210 (second sheet) (January 1985)

| III. DOCUMENTS CONSIDERED TO BE RELEVANT (CONTINUED FROM THE SECOND SHEET) | | |
|---|---|---|
| Category * | Citation of Document, with indication, where appropriate, of the relevant passages | Relevant to Claim No |
| A | SU, A1, 617485 (Otdelenie ordena Lenina instituta khimicheskoi fiziki AN SSSR), 19 July 1978 (19.07.78), the claims | 1,2,6,8 |
| | --- | |
| A | GB, B, 1120429 (Union Carbide Corporation) 17 July 1968 (17.07.68), the claims, fig. 1-2 | 1,9.12 |
| | --- | |
| A | DE, B2, 2620313 (Andrjuschin, Aleksandr Iosifovitsch et al.) 21 August 1980 (21.08.80), the claims, fig. 1-2 | 9-12 |
| | --- | |
| A | SU, A1, 1024153 (Institut khimicheskoi fiziki AN Armyanskoi SSR), 23 June 1983 (23.06.83), the claims | 1-8 |
| | --- | |
| A | CH, A5, 498046 (Firma Hermann C. Stark Berlin) 15 December 1970 (15.12.70), the claims | 1-12 |
| | --- | |
| A | US, A, 3607046 (General Motors Corporation) 21 September 1971 (21.09.71), column 2, lines 70-75; columns 3-4, lines 5-15 | 1-8 |
| | -------------- | |